# EUROPÄISCHE PATENTSCHRIFT

(11) **EP 3 440 639 B1**
(45) Veröffentlichungstag und Bekanntmachung des Hinweises auf die Patenterteilung: **05.02.2020**
(21) Anmeldenummer: 17719187.1
(22) Anmeldetag: 06.04.2017
(51) Int. Cl.: G07C 9/00, E05B 81/76

(54) **FAHRZEUGTÜRGRIFF MIT STEUERSCHALTUNG**
VEHICLE DOOR HANDLE HAVING A CONTROL CIRCUIT
POIGNÉE DE PORTE DE VÉHICULE DOTÉE D'UN CIRCUIT DE COMMANDE

(30) Priorität: 07.04.2016 DE 102016106385
(43) Veröffentlichungstag der Anmeldung: 13.02.2019
(73) Patentinhaber: Huf Hülsbeck & Fürst GmbH & Co. KG, 42551 Velbert (DE)
(72) Erfinder: SIEG, Berthold, 46240 Bottrop (DE)
(74) Vertreter: Zenz Patentanwälte Partnerschaft mbB
(86) Internationale Anmeldenummer: PCT/EP2017/058290
(87) Internationale Veröffentlichungsnummer: WO 2017/174745

(56) Entgegenhaltungen:
- US-A1- 2014 015 597
- "Rectifier", INTERNET CITATION, 26. Juli 2009 (2009-07-26), Seiten 1-10, XP002685796, Gefunden im Internet: URL:http://en.wikipedia.org/w/index.php?ti tle=Rectifier&oldid=304232262 [gefunden am 2012-10-23]
- Anonymous: "Cockcroft-Walton generator - Wikipedia, the free encyclopedia", , 15. Februar 2013 (2013-02-15), XP055123368, Gefunden im Internet: URL:http://en.wikipedia.org/w/index.php?ti tle=Cockcroft%E2%80%93Walton_generator&old id=538322242 [gefunden am 2014-06-13]

## Beschreibung

Die Erfindung betrifft einen Fahrzeugtürgriff, enthaltend eine Fahrzeugtürgriff-Schaltung, die zur Kopplung mit einem fahrzeugseitigen Steuergerät ausgebildet ist, wobei die Fahrzeugtürgriff-Schaltung eine Antennenschaltung zum Abstrahlen eines zu sendenden Signals, eine Steuerschaltung und wenigstens einen Betätigungssensor umfasst, wobei die Steuerschaltung mit dem Betätigungssensor zur Erfassung einer Betätigung gekoppelt ist, wobei die Antennenschaltung einen Serienschwingkreis mit einer Schwingkreis-Induktivität und einer Schwingkreis-Kapazität umfasst, wobei die Fahrzeugtürgriff-Schaltung zwei Kontakte aufweist zur Ankopplung an das fahrzeugseitige Steuergerät über nur zwei Anschlussleitungen, über die die Fahrzeugtürgriff-Schaltung von dem fahrzeugseitigen Steuergerät eine Versorgungsgleichspannung zur Versorgung der Steuerschaltung oder ein Wechselspannungssignal zum Ansteuern der Antennenschaltung empfangen kann, wobei die Antennenschaltung zwischen die beiden Kontakte eingekoppelt ist, wobei die Steuerschaltung zwei mit den beiden Kontakten gekoppelte Spannungsversorgungsanschlüsse aufweist.

Die Steuerschaltung der Fahrzeugtürgriff-Schaltung umfasst üblicherweise einen Mikrokontroller, der die Signale des Betätigungssensors auswertet, um eine Betätigung am Fahrzeugtürgriff zu erfassen. Bei dem Betätigungssensor, mit dem die Steuerschaltung gekoppelt ist, kann es sich beispielsweise um einen Drucktaster oder einen kapazitiven Sensor handeln. Die Sende-Antennenschaltung in dem Fahrzeugtürgriff wird üblicherweise mit einer Wechselspannung angesteuert, um elektromagnetische Signale im Bereich der Niederfrequenz, beispielsweise in einem Frequenzbereich um 130 kHz, auszusenden.

Der Fahrzeugtürgriff ist mit seinem ersten und zweiten Kontakt über lediglich zwei Anschlussleitungen mit dem fahrzeugseitigen Steuergerät gekoppelt. Die beiden Kontakte können durch Klemmen, Steckkontakte oder sonstige Kontaktierungsmöglichkeiten gebildet sein. Über die beiden Anschlussleitungen wird sowohl die Steuerschaltung mit Spannung versorgt als auch die Antennenschaltung angesteuert, um LF-Signale abzustrahlen. Außerdem werden über diese beiden Anschlussleitungen auch Sensorausgangssignale zum Steuergerät übertragen.

Im Stand der Technik sind zahlreiche Gestaltungen von Fahrzeugtürgriffen bekannt, die sowohl Sensoreinrichtungen als auch Niederfrequenz-Sendeantennen aufweisen.

Eine Gestaltung gemäß dem Oberbegriff der Anmeldung ist sowohl dem Dokument JP 5589869 B2 als auch den Dokumenten JP 5589870 B2 und US 2014/0015597 A1 zu entnehmen.

Diese Druckschriften beschreiben einen Türgriff zur Verwendung mit sogenannten Smart-Key-Systemen oder auch Smart-Entry-Systemen. Dabei führt ein Benutzer eines Fahrzeuges ein drahtloses, tragbares Gerät als Fahrzeugschlüssel mit sich. Das Gerät kann zum drahtlosen Verriegeln oder Entriegeln der Tür eines Fahrzeuges verwendet werden. Ein fahrzeugseitiges System sendet über die am Fahrzeug, in den Türgriffen angeordneten Niederfrequenzantennen Signale aus, welche von dem tragbaren Gerät vom Benutzer empfangen werden. Dieses sendet seinerseits im hochfrequenten Funkbereich Informationen zur Identifikation des tragbaren Geräts an das Fahrzeug zurück. Dort werden diese Informationen von einer passenden Empfangsanordnung (die nicht im Türgriff angeordnet ist) empfangen, woraufhin die Identifikation geprüft wird.

Im Fahrzeugtürgriff sind sowohl die Antenne für die Aussendung der niederfrequenten Signale aufgenommen, als auch Mittel zur Erfassung der Betätigung des Türgriffs. Regelmäßig wird nämlich im Türgriff die Betätigung durch die Hand eines Bedieners durch Sensoreinrichtung, beispielsweise kapazitive Annäherungssensoren oder Mikroschalter, erfasst.

Diese Einrichtungen im Fahrzeugtürgriff werden über eine Kabelverbindung mit einem fahrzeugseitigen Steuergerät gekoppelt. Wie die vorgenannten Druckschriften JP 5589869 B2, JP 5589870 B2 und US 2014/0015597 A1 darlegen, gab es im Stand der Technik meist Gestaltungen, bei denen verschiedene Leitungen für die Speisung und Ansteuerung der Niederfrequenzantenne einerseits und die Speisung der Steuerschaltung zur Betätigungserfassung andererseits verwendet wurden. In dem Dokument JP 5589870 B2 ist in Figur 6 ein derartiges System mit mehreren Leitungen gezeigt. Die JP 5589870 B2 schlägt zur Vereinfachung vor, die Ansteuerung und Speisung sowohl der Antenne als auch der Steuerschaltung über ein gemeinsames Leitungspaar zu realisieren. Dazu ist in Figur 2 der JP 5589870 B2 eine entsprechende Schaltung gezeigt, die hier vereinfacht in Figur 1 wiedergegeben ist. Eine derartige Schaltung ist auch Figur 2 der US 2014/0015597 A1 zu entnehmen. Die Leitung vom Steuergerät zum Fahrzeugtürgriff wird zeitweise mit einer Gleichspannung beaufschlagt, um die Steuerschaltung zu speisen, und zeitweise mit einer Wechselspannung, insbesondere einer Rechteckspannung, um die Sende-Antenne anzusteuern.

Im Fahrzeugtürgriff ist dabei der Schwingkreis für die Antennenschaltung so angeordnet, dass bei Belegung der Leitung mit einer Gleichspannung die Antennenschaltung mit ihrem Schwingkreis sperrt (die Impedanz wird sehr groß) und daher die Gleichspannung an der Steuerschaltung zur Verfügung steht. Wird andererseits über die Leitung eine Wechselspannung zur Anregung des Schwingkreises angelegt, so sendet der Antennenschwingkreis die entsprechenden elektromagnetischen Signale und seine Impedanz wird sehr klein. Um auch während dieser Zeit die Steuerschaltung weiterhin mit Spannung zu versorgen, ist in dem genannten Stand der Technik vorgeschlagen, die Spannungsüberhöhung im Schwingkreis zwischen Kondensator und Spule abzugreifen und über einen Pufferkondensator in die Steuerschaltung zu speisen.

Aufgabe der Erfindung ist es, eine alternative Schaltungsanordnung zu dem beschriebenen Zweck bereitzustellen.

Diese Aufgabe wird durch einen Fahrzeugtürgriff, enthaltend eine Fahrzeugtürgriff-Schaltung mit den Merkmalen des Patentanspruches 1 gelöst.

Erfindungsgemäß ist eine in dem Fahrzeugtürgriff enthaltene Fahrzeugtürgriff-Schaltung der eingangs genannten Art dadurch gekennzeichnet, dass zum Zwecke der Nutzung eines Teils des Wechselspannungssignals zur Spannungsversorgung der Steuerschaltung zwischen die beiden Kontakte und parallel zu der Antennenschaltung eine Reihenschaltung, die einen ersten Kondensator mit einem in Reihe geschalteten ersten Gleichrichter umfasst, geschaltet ist, wobei der erste Gleichrichter in Bezug auf die Versorgungsgleichspannung in Sperrrichtung geschaltet ist, und ein zwischen dem ersten Kondensator und dem ersten Gleichrichter angeordneter Abgriff der Reihenschaltung mit einem ersten Spannungsversorgungsanschluss der Steuerschaltung gekoppelt ist, wobei wenigstens ein zweiter Gleichrichter zwischen dem Abgriff und dem ersten Spannungsversorgungsanschluss und/oder zwischen dem zweiten Spannungsversorgungsanschluss und demjenigen Knoten eingekoppelt ist, der einen der beiden Kontakte mit der Reihenschaltung auf der Seite des ersten Gleichrichters verbindet, wobei der zweite Gleichrichter in der gegenüber dem ersten Gleichrichter entgegengesetzten Polung mit dem Abgriff beziehungsweise mit dem Knoten gekoppelt ist, und dass zur Einspeisung der Versorgungsgleichspannung des fahrzeugseitigen Steuergeräts zwischen demjenigen Kontakt der beiden Kontakte, der mit der Reihenschaltung auf der Seite des ersten Kondensators verbunden ist, und dem ersten Spannungsversorgungsanschluss der Steuerschaltung ein dritter Gleichrichter eingekoppelt ist, wobei der dritte Gleichrichter in Bezug auf die Versorgungsgleichspannung in Durchlassrichtung geschaltet ist. Die Gleichrichter sind beispielsweise Halbleiterdioden als diskrete Bauelemente oder als Teil integrierter Schaltungen. Die genannte Reihenschaltung kann neben dem ersten Kondensator und dem ersten Gleichrichter noch weitere Bauelemente umfassen, insbesondere einen ohmschen Widerstand. Die Polung der Gleichrichter hängt selbstverständlich davon ab, ob die Versorgungsgleichspannung positiv oder negativ ist. Wenn hier davon gesprochen wird, dass der zweite Gleichrichter in der gegenüber dem ersten Gleichrichter entgegengesetzten Polung mit dem Abgriff beziehungsweise mit dem Knoten gekoppelt ist, so bedeutet dies, dass der eine Gleichrichter mit seiner Kathode und der andere Gleichrichter mit seiner Anode mit dem Abgriff beziehungsweise mit dem Knoten gekoppelt ist.

Während im eingangs genannten Stand der Technik eine Spannungsauskopplung an einem Abgriff zwischen der Kapazität und der Induktivität des Antennenserienschwingkreises erfolgte, ist bei der erfindungsgemäßen Anordnung die Steuerschaltung mit ihrem vorgeschalteten Speise-Vierpol einfach parallel zu dem zwischen dem ersten Kontakt und dem zweiten Kontakt eingekoppelten Antennenserienschwingkreis geschaltet.

Funktionell umfasst der der Steuerschaltung vorgeschaltete Speise-Vierpol eine den ersten Kondensator, den ersten Gleichrichter und den zweiten Gleichrichter umfassende HF-Gleichrichterschaltung und eine den dritten Gleichrichter umfassende Gleichspannungseinspeise- und -verpolschutzschaltung, die die HF-Gleichrichterschaltung überbrückt. Die HF-Gleichrichterschaltung umfasst eine Schaltung nach Art eines Spannungsverdopplers (insbesondere nach Art einer "Villard-Schaltung") . Eine derartige Schaltung liefert bei kleinem Stromverbrauch eine gegenüber der Eingangsspannung verdoppelte Spannung.

In der Theorie würde es bei einer Speisung des Serienschwingkreises mit einer perfekten Sinusspannung und einer perfekten Abstimmung des Antennenschwingkreises zu einer verschwindenden Impedanz des Schwingkreises kommen und daher verbliebe über dem Schwingkreis auch keine Spannung, die in den parallel angekoppelten Speise-Vierpol der Steuerschaltung eingekoppelt werden könnte. Die Erfindung macht sich jedoch die überraschende Erkenntnis zu Nutze, dass dieser Fall in der Praxis aus verschiedenen Gründen nicht eintritt. Wie vorstehend gesagt, wird von dem fahrzeugseitigen Steuergerät zum Betrieb des niederfrequenten Antennenschwingkreises regelmäßig eine symmetrische Rechteckspannung über die beiden Anschlüsse bzw. Kontakte eingespeist. Eine solche Rechteckspannung weist zahlreiche Oberwellen auf, für welche die Impedanz des Schwingkreises nicht verschwindet. Bereits deshalb ist über dem Schwingkreis regelmäßig ausreichend Spannung vorhanden, die für die Versorgung der Steuerschaltung gemäß dem erfindungsgemäßen Aufbau genutzt werden kann.

Selbst dann, wenn keine Rechteckspannung verwendet würde oder der Oberwellenanteil nicht ausreichend wäre, verbliebe eine Spannung aufgrund des Umstands, dass die Antennenschaltung regelmäßig für die eingespeiste Frequenz fehlangepasst ist. Dies kann an Kapazitäten in den Verbindungsleitungen im Fahrzeug liegen. Regelmäßig werden jedoch die Schwingkreise bewusst so ausgelegt, dass sie unterschiedliche Frequenzen in einem gewissen Frequenzbereich abdecken. Die Resonanz liegt dann in einem mittleren Bereich zwischen den tatsächlich angesteuerten Frequenzen.

Sollten auch diese Effekte nicht ausreichen, kann erfindungsgemäß vorgesehen werden, den erfindungsgemäßen Aufbau so zu konfigurieren, dass die Antennenschaltung gegenüber der erwarteten eingespeisten Frequenz gezielt leicht fehlangepasst wird, um eine ausreichende verbleibende Spannung zur Versorgung der Steuerschaltung bereitzustellen. Eine geeignete Fehlanpassung lässt sich über eine einfache Schaltungssimulation in Abhängigkeit von der erwarteten Anregungsfrequenz und Spannung ermitteln.

Bei der hier üblichen Speisung des Schwingkreises mit einer Rechteckspannung genügt jedoch meist der Oberwellenanteil für die Speisung der Steuerschaltung. Die erfindungsgemäße Schaltung erlaubt es somit, auch parallel zu der Antennenschaltung eine Versorgung der Steuerschaltung für die gesamte Betriebsdauer der Antennenschaltung bereitzustellen. Sobald das fahrzeugseitige Steuergerät die Antennenspeisung beendet und wieder auf Gleichspannungsversorgung der Fahrzeugtürgriff-Schaltung umgeschaltet, so bleibt die Versorgung der Steuerschaltung aufrechterhalten, da der Schwingkreis der Antennenschaltung sowie der erste Gleichrichter sperren und der dritte Gleichrichter in Durchlassrichtung betrieben wird und somit die beiden Spannungsversorgungsanschlüsse der Steuerschaltung über die beiden Kontakte mit den Versorgungsleitungen des die Gleichspannung bereitstellenden Steuergeräts verbunden sind.

Bei einer ersten Ausführungsform ist der Abgriff mit dem dritten Gleichrichter derart gekoppelt, dass der dritte Gleichrichter parallel zu dem ersten Kondensator geschaltet ist, wobei der zweite Gleichrichter zwischen dem Abgriff und dem ersten Spannungsversorgungsanschluss oder zwischen dem zweiten Spannungsversorgungsanschluss und demjenigen Knoten eingekoppelt ist, der einen der beiden Kontakte mit der Reihenschaltung auf der Seite des ersten Gleichrichters verbindet. In dem Betriebsmodus der Gleichspannungsspeisung durch das Steuergerät sind bei dieser Ausführungsform der dritte und der zweite Gleichrichter in Reihe der Steuerschaltung vorgeschaltet, was aufgrund der Spannungsabfälle zu einer etwas geringeren Versorgungsspannung für die Steuerschaltung führt.

Bei einer zweiten bevorzugten Ausführungsform ist der Abgriff über den zweiten Gleichrichter mit dem dritten Gleichrichter derart gekoppelt, dass der dritte Gleichrichter parallel zu dem ersten Kondensator und dem zweiten Gleichrichter geschaltet ist. In dem Betriebsmodus der Gleichspannungsspeisung ist bei dieser Ausführungsform nur der dritte Gleichrichter in Reihe zu der Steuerschaltung geschaltet.

Bei einer bevorzugten Ausführungsform umfasst die den ersten Kondensator und den ersten Gleichrichter umfassende Reihenschaltung einen ersten ohmschen Widerstand. Dabei ist vorzugsweise der dritte Gleichrichter mit wenigstens einem zweiten ohmschen Widerstand in Reihe geschaltet. Diese Maßnahmen dienen der Strombegrenzung.

Bei einer bevorzugten Weiterbildung der zweiten bevorzugten Ausführungsform der Fahrzeugtürgriff-Schaltung ist ein ohmscher Widerstand zwischen einem der beiden Kontakte und dem die Reihenschaltung mit dem dritten Gleichrichter verbindenden Knoten eingekoppelt. Dies hat den Vorteil, dass kein weiterer Vorwiderstand verwendet zu werden braucht, und erlaubt somit eine Schaltungsvariante des Speise-Vierpols mit einer minimalen Anzahl von Bauelementen.

Bei einer bevorzugten Weiterbildung der Fahrzeugtürgriff-Schaltung ist ein zweiter Kondensator zwischen die Spannungsversorgungsanschlüsse der Steuerschaltung geschaltet. Dieser glättet und puffert die Spannungsversorgung. Der zweite Kondensator hat vorzugsweise eine Kapazität von 0,5 µF bis 50 µF, beispielsweise von 4,7 µF.

Vorzugsweise hat der erste Kondensator als Teil der HF-Gleichrichterschaltung eine Kapazität von 10 nF bis 500 nF, insbesondere von etwa 100 nF. Dieser Wert ist insbesondere bei einer Antennenspeisung mit etwa 134 kHz geeignet.

Vorteilhafte und/oder bevorzugte Weiterbildungen der Erfindung sind in den Unteransprüchen gekennzeichnet.

Die Erfindung wird nun anhand von in den Zeichnungen dargestellten bevorzugten Ausführungsbeispielen näher erläutert. In den Zeichnungen zeigt:
Figur 1 eine Schaltung gemäß dem Stand der Technik;
Figur 2 eine erste Ausführungsform der erfindungsgemäßen Schaltung;
Figur 3 eine zweite Ausführungsform der erfindungsgemäßen Schaltung;
Figur 4 eine dritte Ausführungsform der erfindungsgemäßen Schaltung; und
Figur 5 eine vierte Ausführungsform der erfindungsgemäßen Schaltung.

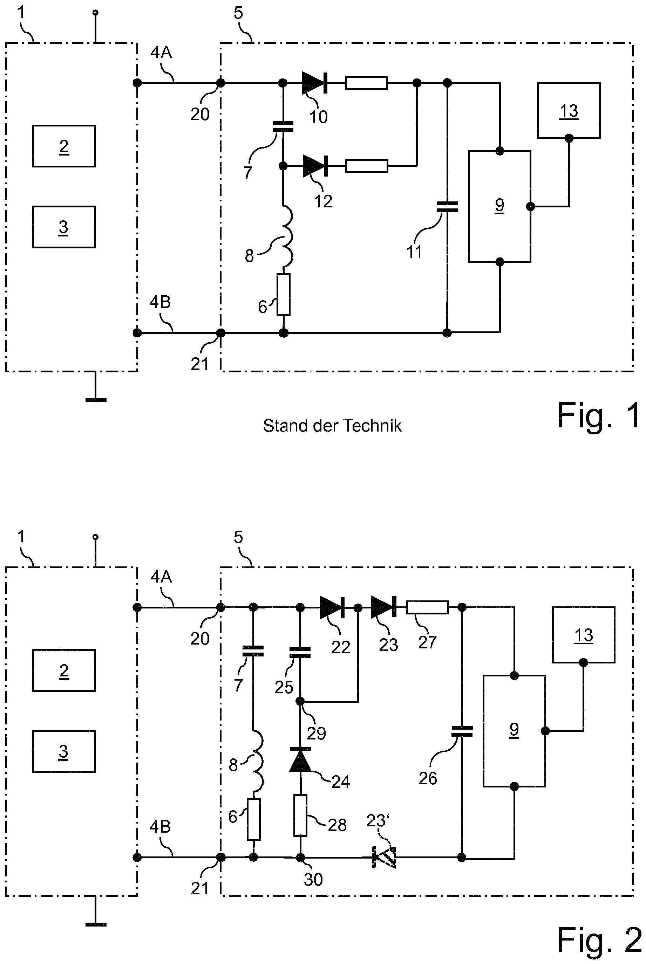

In Figur 1 ist eine Schaltung gezeigt, wie sie auch aus den vorstehend genannten Dokumenten aus dem Stand der Technik, insbesondere der JP 5589870 B2, dort Figur 2, bekannt ist.

Auf Fahrzeugseite ist eine ECU (Electronic Control Unit) 1 vorgesehen. Diese ECU hat einen Antennenbetriebsteil 2 und einen Stromversorgungsteil 3. Die ECU 1 ist außerdem mit der Fahrzeugmasse und der Bordspannungsversorgung des Kraftfahrzeugs gekoppelt. Die ECU 1 führt zwei Kabel 4A und 4B zu dem Fahrzeugtürgriff-Schaltung 5. Ein erster Kontakt 20 der Fahrzeugtürgriff-Schaltung 5 ist mit dem Kabel 4A gekoppelt, und ein zweiter Kontakt 22 der Fahrzeugtürgriff-Schaltung 5 ist mit dem Kabel 4B gekoppelt.

Die innerhalb des Fahrzeugtürgriffes angeordnete Fahrzeugtürgriff-Schaltung 5 weist einen AntennenSerienschwingkreis mit einer Kapazität 7 und einer Induktivität 8 und eine Steuerschaltung 9 auf (der Widerstand 6 bezeichnet den ohmschen Widerstand der Wicklung der Induktivität). Es ist ersichtlich, dass für den Fall, dass an den Kontakten 20, 21 eine Gleichspannung anliegt, der Schwingkreis mit dem Kapazität 7 und der Induktivität 8 sperrt und eine Versorgung der Steuerschaltung 9 über eine Diode 10 erfolgt. Ein Pufferkondensator 11 dient der Stabilisierung der Versorgungsspannung. Wird hingegen eine Wechselspannung an die Kontakte 20, 21 angelegt, so wird der Serienschwingkreis leitend, wobei - insbesondere bei Annäherung an die Resonanzfrequenz - keine ausreichende Spannung mehr an der Steuerschaltung 9 anliegt. Die an den Abgriff zwischen dem Kondensator 7 und der Induktivität 8 angekoppelte Diode 12 ermöglicht es jedoch, die zwischen dem Kondensator 7 und der Induktivität 8 überhöhte Spannung zur Versorgung der Steuerschaltung 9 auch während des Betriebs in der Sendephase der Antenne zu nutzen.

Der Sensor 13 ist mit der Steuerschaltung 9 gekoppelt. Es kann sich dabei um einen kapazitiven Sensor oder auch einen Tastschalter handelt. Die Steuerschaltung 9 wertet die Signale des Sensors 13 aus, um eine Betätigung am Fahrzeuggriff zu erfassen. Ein diese Erfassung anzeigendes Signal wird ebenfalls über die Leitungen 4A und 4B von der Fahrzeugtürgriff-Schaltung 5 an das Steuergerät 1 weitergeleitet und dort ausgewertet.

Figur 2 zeigt ein erstes Ausführungsbeispiel der erfindungsgemäßen Fahrzeugtürgriff-Schaltung 5. Auf Fahrzeugseite ist - wie im Stand der Technik - eine ECU (Electronic Control Unit) 1 mit einem Antennenbetriebsteil 2 und einem Stromversorgungsteil 3 vorgesehen. Die ECU 1 ist außerdem mit der Fahrzeugmasse und einer Bordspannungsversorgung des Kraftfahrzeugs gekoppelt. Die ECU 1 ist über zwei Kabel oder Anschlussleitungen 4A und 4B mit der Fahrzeugtürgriff-Schaltung 5 verbunden. Ein erster Kontakt 20 der Fahrzeugtürgriff-Schaltung 5 ist mit dem Kabel 4A gekoppelt, das hier die Spannungsversorgungsleitung darstellt. Ein zweiter Kontakt 22 der Fahrzeugtürgriff-Schaltung 5 ist mit dem Kabel 4B gekoppelt, das hier eine Fahrzeugtürgriff-Masse darstellt. Die Fahrzeugtürgriff-Masse des Kontakts 21 kann der Fahrzeugmasse des Steuergeräts entsprechen, kann aber auch im Potential geringfügig davon abweichen.

Der Serienschwingkreis der Fahrzeugtürgriff-Schaltung 5 mit der Kapazität 7, der Induktivität 8 und dem ohmschen Widerstand 6 ist zwischen die Kontakte 20 und 21 eingekoppelt. Parallel zu dem Serienschwingkreis ist eine Speise-Vierpolschaltung mit angekoppelter Steuerschaltung 9 geschaltet. Wiederum ist der Sensor 13 mit der Steuerschaltung 9 gekoppelt.

Die Speise-Vierpolschaltung umfasst eine Reihenschaltung von einem ersten Gleichrichter 24 (Diode), einem ersten Kondensator 25 und einem Widerstand 28, die parallel zu dem Serienschwingkreis mit den Kontakten 20 und 21 verbunden ist. Diese Reihenschaltung weist einen zwischen dem ersten Kondensator 25 und der Kathode des ersten Gleichrichters 24 angeordneten Abgriff 29 auf. Mit dem Abgriff 29 ist die Anode eines zweiten Gleichrichters 23 verbunden. Die Kathode des zweiten Gleichrichters 23 ist über einen Strombegrenzungswiderstand 27 mit einem der beiden Spannungsversorgungsanschlüsse der Steuerschaltung 9 verbunden. Parallel zu den Spannungsversorgungsanschlüssen der Steuerschaltung 9 ist eine Puffer-Kondensator 26 geschaltet. Zwischen dem Knoten, der den ersten Kondensator 25 mit dem Kontakt 20 verbindet, und dem Knoten, der den Abgriff 29 mit der Anode des zweiten Gleichrichters verbindet, ist ein dritter Gleichrichter 22 derart eingekoppelt, dass er bei Speisung der Fahrzeugtürgriff-Schaltung 5 mit Gleichspannung in Durchlassrichtung geschaltet ist.

Bei einer anliegenden Gleichspannung zwischen dem ersten Kontakt 20 und dem zweiten Kontakt 21 sperrt der Serienschwingkreis, und die Steuerschaltung 9 wird über die Gleichrichter 22 und 23 gespeist. Wird jedoch eine Wechselspannung in Gestalt einer (gleichspannungsfreien) Rechteckspannung mit einer sich der Schwingkreis-Resonanzfrequenz annähernden Frequenz angelegt, wird der Schwingkreis aus dem Kondensator 7 und der Induktivität 8 angeregt. Angesichts der Rechteckspannung sind jedoch zumindest die Oberwellen nicht in Resonanz mit dem Schwingkreis. Diese können über die Schaltung dieser Ausführungsform genutzt werden, um die Steuerschaltung 9 mit einer Gleichspannung zu versorgen. Der dritte Gleichrichter 22 stellt einen Verpolschutz zum Schutz der Steuerschaltung dar. Der Kondensator 25 in Kombination mit dem Gleichrichter 23 und dem Gleichrichter 24 ermöglicht es, die aus den Oberwellen resultierende Spannung zu verstärken und als Gleichspannung über den Pufferkondensator 26 an die Steuerschaltung 9 bereitzustellen. Der Kondensator 25 und die Gleichrichter 23, 24 bilden eine Spannungsverdopplungsschaltung und erzeugen aus zugeführter Wechselspannung eine betragsmäßig höhere Gleichspannung (einstufige Kaskade).

Dies ist möglich, da keine perfekte Anpassung zwischen der Anregungsspannung und dem Schwingkreis vorliegt. Dies ist insbesondere dann der Fall, wenn eine Rechteckspannung eingespeist wird. Ansonsten kann der Schwingkreis auch gezielt fehlabgestimmt zu der Eingangsfrequenz sein, um eine ausreichende Spannungsversorgung der Steuerschaltung 9 bereitzustellen.

Die Erfindung funktioniert also insbesondere dann, wenn die anliegende Spannung keine perfekte Sinusspannung mit einer perfekten Anpassung auf den Schwingkreis ist.

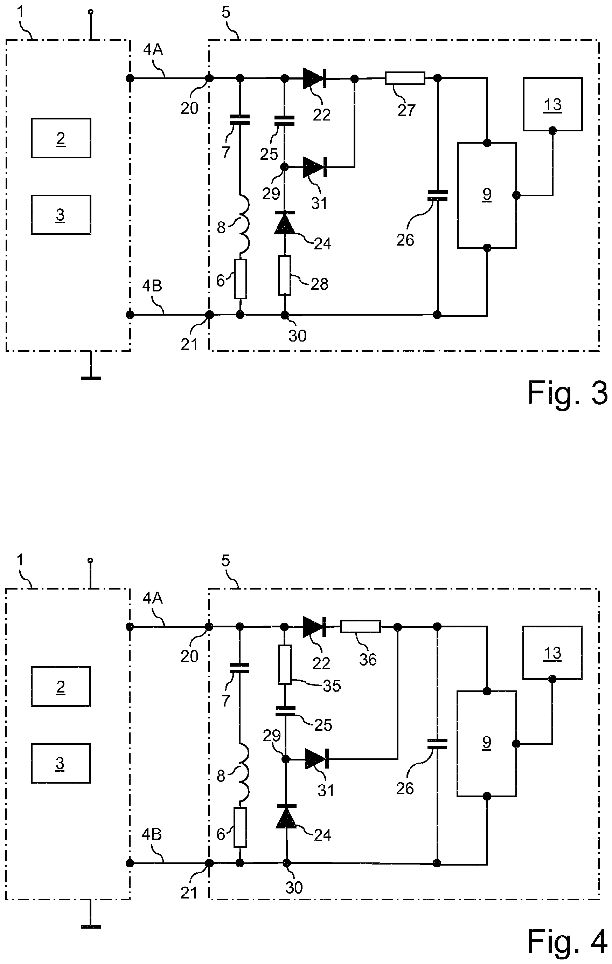

Figur 3 zeigt ein alternatives Ausführungsbeispiel der erfindungsgemäßen Schaltung. Auch hier umfasst die Speise-Vierpolschaltung eine Reihenschaltung eines ersten Gleichrichters 24, eines ersten Kondensator 25 und eines Widerstands 28, die parallel zu dem Serienschwingkreis mit den Kontakten 20 und 21 verbunden ist. Diese Reihenschaltung weist wiederum einen zwischen dem ersten Kondensator 25 und der Kathode des ersten Gleichrichters 24 angeordneten Abgriff 29 auf. Mit dem Abgriff 29 ist die Anode eines zweiten Gleichrichters 31 verbunden. Die Kathode des zweiten Gleichrichters 31 ist über einen Strombegrenzungswiderstand 27 mit einem der beiden Spannungsversorgungsanschlüsse der Steuerschaltung 9 verbunden. Parallel zu den Spannungsversorgungsanschlüssen der Steuerschaltung 9 ist eine Puffer-Kondensator 26 geschaltet.

Bei diesem zweiten Ausführungsbeispiel ist jedoch der dritte Gleichrichter 22, der bei Speisung der Fahrzeugtürgriff-Schaltung 5 mit Gleichspannung in Durchlassrichtung geschaltet ist, zwischen dem Knoten, der den ersten Kondensator 25 mit dem Kontakt 20 verbindet, und dem Knoten, der die Kathode des zweiten Gleichrichters 31 mit dem Strombegrenzungswiderstand 27 verbindet, eingekoppelt.

Der Gleichrichter 22 liegt somit parallel zu einer Serienschaltung des Kondensators 25 und des Gleichrichters 31. Dies führt dazu, dass der Kondensator 25 zeitweise (während jedes zweiten Halbzyklus) einseitig potenzialfrei ist.

In Figur 4 ist eine Abwandlung des zweiten Ausführungsbeispiels aus Figur 3 gezeigt. Dort ist der ohmsche Widerstand 35 der Reihenschaltung zwischen den Kondensator 30 und den ersten Kontakt 20 geschaltet. Außerdem ist die Kathode des zweiten Gleichrichters 31 direkt mit dem Spannungsversorgungsanschluss der Steuerschaltung 9 verbunden, so dass der Strombegrenzungswiderstand 36 in Reihe mit dem dritten Gleichrichter 22 zwischen dem Knoten, der den ersten Kondensator 25 mit dem Kontakt 20 verbindet, und dem Knoten, der mit dem Spannungsversorgungsanschluss der Steuerschaltung 9 verbunden ist, eingekoppelt.

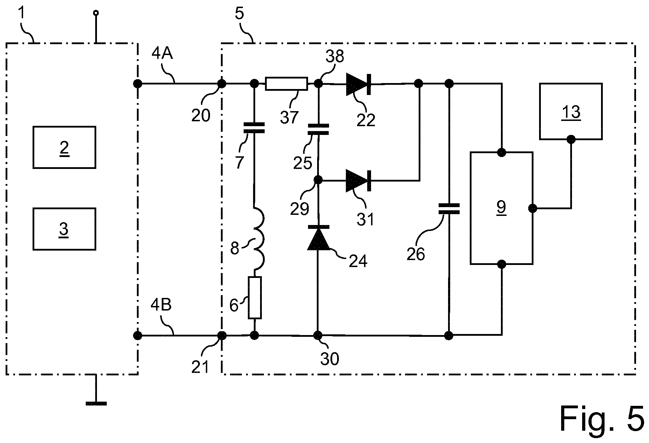

Figur 5 zeigt ein viertes Ausführungsbeispiel der erfindungsgemäßen Fahrzeugtürgriff-Schaltung 5, die mit einer minimalen Anzahl von Bauelementen auskommt. Der Serienschwingkreis mit der Kapazität 7, der Induktivität 8 und dem ohmschen Widerstand 6 ist wiederum zwischen die Kontakte 20 und 21 eingekoppelt. Parallel zu dem Serienschwingkreis ist die Speise-Vierpolschaltung mit angekoppelter Steuerschaltung 9 geschaltet. Wiederum ist der Sensor 13 ist mit der Steuerschaltung 9 gekoppelt. Die Speise-Vierpolschaltung, die hier mit einer minimalen Anzahl von Bauelementen auskommt, umfasst eine Reihenschaltung des ersten Gleichrichters 24 und des ersten Kondensators 25, die hier über einen Widerstand 37 mit dem Kontakt 20 verbunden ist. Diese Reihenschaltung weist wiederum einen zwischen dem ersten Kondensator 25 und der Kathode des ersten Gleichrichters 24 angeordneten Abgriff 29 auf. Mit dem Abgriff 29 ist die Anode des zweiten Gleichrichters 31 verbunden. Die Kathode des zweiten Gleichrichters 31 ist direkt mit einem der beiden Spannungsversorgungsanschlüsse der Steuerschaltung 9 verbunden. Parallel zu den Spannungsversorgungsanschlüssen der Steuerschaltung 9 ist der Puffer-Kondensator 26 geschaltet. Der dritte Gleichrichter 22, der bei Speisung der Fahrzeugtürgriff-Schaltung 5 mit Gleichspannung in Durchlassrichtung geschaltet ist, ist zwischen dem Knoten, der den ersten Kondensator 25 mit dem Widerstand 37 verbindet, und dem Knoten, der die Kathode des zweiten Gleichrichters 31 mit dem Spannungsversorgungsanschluss der Steuerschaltung 9 verbindet, eingekoppelt. Der dem Speise-Vierpol vorgeschaltete Strombegrenzungswiderstand 37 begrenzt dem Strom sowohl im Gleichspannungsbetrieb als auch bei Wechselsignalspeisung. Bei diesem Ausführungsbeispiel umfasst der Speise-Vierpol mit dem ersten, zweiten und dritten Gleichrichter 24, 31 und 25, dem ersten und zweiten Kondensator 25 und 26 und dem einzigen Vorwiderstand 37 nur insgesamt sechs Bauelemente.

Die Dimensionierung der verschiedenen Bauteile ist auf die gewünschte Sendefrequenz sowie auch die erwarteten Betriebsspannungen abzustimmen. In sämtlichen gezeigten Ausführungsbeispielen kann das System beispielweise bei einer Frequenz von 134,2 kHz mit einer Spannung 6,8 V gespeist werden. Der erste Kondensator 25 kann beispielsweise eine Kapazität von 100 nF aufweisen. Der Pufferkondensator 26 kann beispielsweise eine Kapazität von 4,7 µF aufweisen. Die Widerstände 27, 28, 35, 36 und 37 können beispielsweise Widerstandwerte von 560 Ω haben.

## Patentansprüche

1. Fahrzeugtürgriff, enthaltend eine Fahrzeugtürgriff-Schaltung (5), die zur Kopplung mit einem fahrzeugseitigen Steuergerät (1) ausgebildet ist, wobei die Fahrzeugtürgriff-Schaltung (5) eine Antennenschaltung (6, 7, 8) zum Abstrahlen eines zu sendenden Signals, eine Steuerschaltung (9) und wenigstens einen Betätigungssensor (13) umfasst, wobei die Steuerschaltung (9) mit dem Betätigungssensor (13) zur Erfassung einer Betätigung gekoppelt ist, wobei die Antennenschaltung (6, 7, 8) einen Serienschwingkreis mit einer Schwingkreis-Induktivität (8) und einer Schwingkreis-Kapazität (7) umfasst,
wobei die Fahrzeugtürgriff-Schaltung (5) zwei Kontakte (20, 21) aufweist zur Ankopplung an das fahrzeugseitige Steuergerät (1) über nur zwei Anschlussleitungen (4A, 4B), über die die Fahrzeugtürgriff-Schaltung (5) von dem fahrzeugseitigen Steuergerät (1) eine Versorgungsgleichspannung zur Versorgung der Steuerschaltung (9) oder ein Wechselspannungssignal zum Ansteuern der Antennenschaltung (6, 7, 8) empfangen kann,
wobei die Antennenschaltung (6, 7, 8) zwischen die beiden Kontakte (20, 21) eingekoppelt ist,
wobei die Steuerschaltung (9) zwei mit den beiden Kontakten (20, 21) gekoppelte Spannungsversorgungsanschlüsse aufweist,
**dadurch gekennzeichnet,**
**dass** zum Zwecke der Nutzung eines Teils des Wechselspannungssignals zur Spannungsversorgung der Steuerschaltung (9)
zwischen die beiden Kontakte (20, 21) und parallel zu der Antennenschaltung (6, 7, 8) eine Reihenschaltung, die einen ersten Kondensator (25) mit einem in Reihe geschalteten ersten Gleichrichter (24) umfasst, geschaltet ist, wobei der erste Gleichrichter (24) in Bezug auf die Versorgungsgleichspannung in Sperrrichtung geschaltet ist, und
ein zwischen dem ersten Kondensator (25) und dem ersten Gleichrichter (24) angeordneter Abgriff (29) der Reihenschaltung mit einem ersten Spannungsversorgungsanschluss der Steuerschaltung (9) gekoppelt ist,
wobei wenigstens ein zweiter Gleichrichter (23; 23'; 31) zwischen dem Abgriff (29) und dem ersten Spannungsversorgungsanschluss und/oder zwischen dem zweiten Spannungsversorgungsanschluss und demjenigen Knoten (30) eingekoppelt ist, der einen der beiden Kontakte (20, 21) mit der Reihenschaltung auf der Seite des ersten Gleichrichters (24) verbindet, wobei der zweite Gleichrichter (23; 23'; 31) in der gegenüber dem ersten Gleichrichter (24) entgegengesetzten Polung mit dem Abgriff (29) beziehungsweise mit dem Knoten (30) gekoppelt ist, und
**dass** zur Einspeisung der Versorgungsgleichspannung des fahrzeugseitigen Steuergeräts (1) zwischen demjenigen Kontakt (20) der beiden Kontakte, der mit der Reihenschaltung auf der Seite des ersten Kondensators (25) verbunden ist, und dem ersten Spannungsversorgungsanschluss der Steuerschaltung (9) ein dritter Gleichrichter (22) eingekoppelt ist, wobei der dritte Gleichrichter (22) in Bezug auf die Versorgungsgleichspannung in Durchlassrichtung geschaltet ist.

2. Fahrzeugtürgriff nach Anspruch 1, wobei der Abgriff (29) mit dem dritten Gleichrichter (22) derart gekoppelt ist, dass der dritte Gleichrichter (22) parallel zu dem ersten Kondensator (25) geschaltet ist, wobei der zweite Gleichrichter (23; 23') zwischen dem Abgriff (29) und dem ersten Spannungsversorgungsanschluss oder zwischen dem zweiten Spannungsversorgungsanschluss und demjenigen Knoten (30) eingekoppelt ist, der einen der beiden Kontakte (20, 21) mit der Reihenschaltung auf der Seite des ersten Gleichrichters (24) verbindet.

3. Fahrzeugtürgriff nach Anspruch 1, wobei der Abgriff (29) über den zweiten Gleichrichter (31) mit dem dritten Gleichrichter (22) derart gekoppelt ist, dass der dritte Gleichrichter (22) parallel zu einer Reihenschaltung des ersten Kondensators (25) und des zweiten Gleichrichters (31) geschaltet ist.

4. Fahrzeugtürgriff nach einem der Ansprüche 1 bis 3, wobei die den ersten Kondensator (25) und den ersten Gleichrichter (24) umfassende Reihenschaltung einen ersten ohmschen Widerstand (28; 35) umfasst.

5. Fahrzeugtürgriff nach Anspruch 4, wobei der dritte Gleichrichter (22) mit wenigstens einem zweiten ohmschen Widerstand (27; 36) in Reihe geschaltet ist.

6. Fahrzeugtürgriff nach Anspruch 3, wobei ein ohmscher Widerstand (37) zwischen einem der beiden Kontakte (20) und dem die Reihenschaltung mit dem dritten Gleichrichter (22) verbindenden Knoten (38) eingekoppelt ist.

7. Fahrzeugtürgriff nach einem der vorangehenden Ansprüche, wobei ein zweiter Kondensator (26) zwischen die Spannungsversorgungsanschlüsse der Steuerschaltung (9) geschaltet ist.

8. Fahrzeugtürgriff nach einem der vorangehenden Ansprüche, wobei der erste Kondensator (25) eine Kapazität von 10 nF bis 500 nF hat.

9. Fahrzeugtürgriff nach einem der Ansprüche 7 oder 8, wobei der zweite Kondensator (26) eine Kapazität von 0,5 µF bis 50 µF hat.

## Claims

1. A vehicle door handle containing a vehicle door handle circuit (5) configured for coupling with a vehicle-sided control device (1), the vehicle door handle circuit (5) comprising an antenna circuit (6, 7, 8) for emitting a signal to be sent, a control circuit (9) and at least one actuation sensor (13), the control circuit (9) being coupled with the actuation sensor (13) for detecting an actuation, the antenna circuit (6, 7, 8) comprising a series resonant circuit having a resonant circuit inductance (8) and a resonant circuit capacitance (7),
the vehicle door handle circuit (5) having two contacts (20, 21) for coupling to the vehicle-sided control device (1) via only two connection cables (4A, 4B), via which the vehicle door handle circuit (5) can receive a direct-current supply voltage for supplying the control circuit (9) or an alternating-current voltage signal for driving the antenna circuit (6, 7, 8) from the vehicle-sided control device (1),
the antenna circuit (6, 7, 8) being coupled between the two contacts (20, 21),
the control circuit (9) comprising two voltage supply junctions coupled to the two contacts (20, 21),
**characterized in that**,
for the purpose of using a portion of the alternating-current voltage signal for the voltage supply of the control circuit (9),
a series circuit, which comprises a first capacitor (25) with a first rectifier (24) connected in series, is connected between the two contacts (20, 21) and in parallel to the antenna circuit (6, 7, 8), wherein the first rectifier (24) is connected in the reverse-biased direction with regard to the direct-current supply voltage, and
a tap (29) of the series circuit, located between the first capacitor (25) and the first rectifier (24), is coupled with a first voltage supply junction of the control circuit (9),
wherein at least one second rectifier (23; 23'; 31) is coupled between the tap (29) and the first voltage supply junction and/or between the second voltage supply junction and the node (30), which connects one of the two contacts (20, 21) to the series circuit on the side of the first rectifier (24), wherein the second rectifier (23; 23'; 31) is coupled to the tap (29) or the node (30), respectively, in the opposite polarity vis-à-vis the first rectifier (24) and
that, for feeding the direct-current supply voltage of the vehicle-sided control device (1), a third rectifier (22) is coupled between the contact (20) of the two contacts, which is connected to the series circuit on the side of the first capacitor (25), and the first voltage supply junction of the control circuit (9), wherein the third rectifier (22) is connected in the forward-biased direction with regard to the direct-current supply voltage.

2. The vehicle door handle according to claim 1, wherein the tap (29) is coupled to the third rectifier (22) in such a manner that the third rectifier (22) is connected in parallel to the first capacitor (25), wherein the second rectifier (23; 23') is coupled between the tap (29) and the first voltage supply junction or between the second voltage supply junction and the node (30), which connects one of the two contacts (20, 21) to the series circuit on the side of the first rectifier (24) .

3. The vehicle door handle according to claim 1, wherein the tap (29) is coupled via the second rectifier (31) to the third rectifier (22) in such a manner that the third rectifier (22) is connected in parallel to a series connection of the first capacitor (25) and the second rectifier (31).

4. The vehicle door handle according to one of claims 1 through 3, wherein the series circuit comprising the first capacitor (25) and the first rectifier (24) comprises a first ohmic resistor (28; 35).

5. The vehicle door handle according to claim 4, wherein the third rectifier (22) is connected in series with at least one second ohmic resistor (27; 36).

6. The vehicle door handle according to claim 3, wherein an ohmic resistor (37) is coupled between one of the two contacts (20) and the node (38) connecting the series circuit to the third rectifier (22).

7. The vehicle door handle according to one of the preceding claims, wherein a second capacitor (26) is connected between the voltage supply junctions of the control circuit (9) .

8. The vehicle door handle according to one of the preceding claims, wherein the first capacitor (25) has a capacitance of 10 nF to 500 nF.

9. The vehicle door handle according to one of the preceding claims, wherein the second capacitor (26) has a capacitance of 0.5 µF to 50 µF

## Revendications

1. Poignée de portière d'un véhicule, comprenant un circuit de poignée de portière de véhicule (5), qui est conçu pour être connecté sur un appareil de commande (1) inhérent au véhicule, le circuit de poignée de portière de véhicule (5) comprenant un circuit d'antenne (6, 7, 8), destiné à émettre un signal qui doit être envoyé, un circuit de commande (9) et au moins un capteur d'actionnement (13), le circuit de commande (9) étant connecté avec le capteur d'actionnement (13), pour détecter un actionnement, le circuit d'antenne (6, 7, 8) comprenant un circuit oscillant série disposant d'une inductance de circuit oscillant (8) et d'une capacité de circuit oscillant (7),
le circuit de poignée de portière de véhicule (5) comportant deux contacts (20, 21), destinés à être connectés sur l'appareil de commande (1) inhérente au véhicule par l'intermédiaire de seulement deux lignes de raccordement (4A, 4B), par l'intermédiaire desquelles le circuit de poignée de portière de véhicule (5) est susceptible de réceptionner de la part de l'appareil de commande (1) inhérent au véhicule une tension d'alimentation continue, destinée à alimenter le circuit de commande (9) ou un signal de tension alternée, destiné à amorcer le circuit d'antenne (6, 7, 8),
le circuit d'antenne (6, 7, 8) étant interconnecté entre les deux contacts (20, 21),
le circuit de commande (9) comportant deux raccordements d'alimentation en tension, connectés sur les deux contacts (20, 21),
**caractérisée**
**en ce qu'**au fin de l'utilisation d'une partie du signal de tension alternée pour l'alimentation en tension du circuit de commande (9) entre les deux contacts (20, 21) et à la parallèle du circuit d'antenne (6, 7, 8), un circuit en série qui comprend un premier condensateur (25), pourvu d'un premier redresseur (24) monté en série est commuté, le premier redresseur (24) étant commuté en sens inverse au niveau de la tension d'alimentation continue, et
**en ce qu'**une prise (29) du circuit en série, placée entre le premier condensateur (25) et le premier redresseur (24) est connectée sur un premier raccordement d'alimentation en tension du circuit de commande (9),
au moins un deuxième redresseur (23 ; 23' ; 31) étant couplé entre la prise (29) et le premier raccordement d'alimentation en tension et/ou entre le deuxième raccordement d'alimentation en tension et le nœud (30) qui relie l'un des deux contacts (20, 21) avec le circuit en série sur le côté du premier redresseur (24), le deuxième redresseur (23; 23'; 31) étant connecté dans la polarité opposée par rapport au premier redresseur (24) avec la prise (29), respectivement avec le nœud (30), et
**en ce que** pour alimenter la tension d'alimentation continue de l'appareil de commande (1) inhérent au véhicule, entre le contact (20) parmi les deux contacts qui est relié avec le circuit en série sur le côté du premier condensateur (25) et le premier raccordement d'alimentation en tension du circuit de commande (9) est couplé un troisième redresseur (22), le troisième redresseur (22) étant commuté dans le sens passant au niveau de la tension d'alimentation continue.

2. Poignée de portière d'un véhicule selon la revendication 1, la prise (29) étant connectée sur le troisième redresseur (22), de telle sorte que le troisième redresseur (22) soit commuté à la parallèle du premier condensateur (25), le deuxième redresseur (23 ; 23') étant couplé entre la prise (29) et le premier raccordement d'alimentation en tension ou entre le deuxième raccordement d'alimentation en tension et le nœud (30) qui relie l'un des deux contacts (20, 21) avec le circuit en série, sur le côté du premier redresseur (24).

3. Poignée de portière d'un véhicule selon la revendication 1, la prise (29) étant connectée par l'intermédiaire du deuxième redresseur (31) avec le troisième redresseur (22), de telle sorte que le troisième redresseur (22) soit couplé en parallèle d'un circuit en série du premier condensateur (25) et du deuxième redresseur (31).

4. Poignée de portière d'un véhicule selon l'une quelconque des revendications 1 à 3, le circuit en série comprenant le premier condensateur (25) et le premier redresseur (24) comprenant une première résistance ohmique (28 ; 35).

5. Poignée de portière d'un véhicule selon la revendication 4, le troisième redresseur (22) étant monté en série avec au moins une deuxième résistance ohmique (27 ; 36).

6. Poignée de portière d'un véhicule selon la revendication 3, une résistance ohmique (37) étant couplée entre l'un des deux contacts (20) et le nœud (38) reliant le circuit en série avec le troisième redresseur (22).

7. Poignée de portière d'un véhicule selon l'une quelconque des revendications précédentes, un deuxième condensateur (26) étant commuté entre les raccordements d'alimentation en tension du circuit de commande (9).

8. Poignée de portière d'un véhicule selon l'une quelconque des revendications précédentes, le premier condensateur (25) ayant une capacité de 10 nF à 500 nF.

9. Poignée de portière d'un véhicule selon l'une quelconque des revendications 7 ou 8, le deuxième condensateur (26) ayant une capacité de 0,5 µF à 50 µF.
